## Europäisches Patentamt
## European Patent Office
## Office européen des brevets

(19)

(11) Numéro de publication: **0 115 453**
**B1**

(12) # FASCICULE DE BREVET EUROPÉEN

(45) Date de publication du fascicule du brevet:
**13.08.86**

(51) Int. Cl.⁴: **F 16 D 55/224**

(21) Numéro de dépôt: **84400064.6**

(22) Date de dépôt: **12.01.84**

(54) **Frein à disque à étrier coulissant.**

(30) Priorité: **20.01.83 FR 8300845**

(43) Date de publication de la demande:
**08.08.84 Bulletin 84/32**

(45) Mention de la délivrance du brevet:
**13.08.86 Bulletin 86/33**

(84) Etats contractants désignés:
**DE GB IT NL SE**

(56) Documents cité:
**FR-A-1 390 337**
**FR-A-2 226 039**
**FR-A-2 289 799**
**GB-A-1 563 213**

(73) Titulaire: **BENDIX France, 126, rue de Stalingrad, F-93700 Drancy (FR)**

(72) Inventeur: **Mery, Jean- Claude, 61 rue Emile Zola, F-93320 Pavillons S/Bois (FR)**

(74) Mandataire: **Poidatz, Emmanuel, Service Brevets Bendix 44 rue François 1er, F-75008 Paris (FR)**

LIBER, STOCKHOLM 1986

## Description

L'invention a pour objet un frein à disque à étrier coulissant, notamment pour véhicule automobile, du type comportant un étrier monté coulissant par l'intermédiaire de deux colonnettes axiales sur un support fixe et comportant au moins une portion de voûte chevauchant le disque, des moyens d'actionnement associés à l'étrier pour solliciter des éléments de friction contre les faces du disque, les colonnettes, solidaires de l'étrier, traversant des alésages de guidage et de coulissement formés dans des bras du support fixe s'étendant exialement au-delà, radialement, de la périphérie du disque, et reçus dans des ouvertures de l'étrier, le disque définissant, lorsqu'il tourne dans le sens de rotation avant (AV), un bras avant et un bras arrière.

Un frein de ce type a été décrit dans le document FR-A-2 289 799. Ce document décrit un frein à disque dont l'étrier comporte une portion de voûte centrale massive chevauchant le disque et les éléments de friction, et présente dans l'inconvénient de nécessiter le démontage d'une colonnette et la rotation de l'étrier autour de l'autre colonnette afin de pouvoir procéder au remplacement des éléments de friction. Cette opération, bien que simple, présente les risques de détérioration de la qualité du coulissement de l'étrier, par exemple par pollution des zones de contact de coulissement, et également le risque de détérioration de la conduite d'amenée de liquide de frein située entre le maître-cylindre du véhicule par exemple, et le moteur de frein associé à l'étrier.

L'invention a pour objet de proposer un frein à disque à étrier coulissant évitant les inconvénients sus-mentionnés, permettant une extraction des éléments de friction sans démontage de l'étrier, lequel présente une structure allégée tout en conservant la rigidité voulue.

Pour ce faire, selon l'invention, l'étrier comporte une première et une seconde ouvertures dissymétriques délimitées chacune par deux portions de voûte, la première ouverture étant dimensionnée pour recevoir le bras arrière et la colonnette correspondante et permettre l'extraction radiale des éléments de friction, la seconde ouverture étant dimensionnée pour recevoir le bras avant, sans interférer avec celle-ci, et la colonnette correspondante.

Avec cet agencement, les éléments de friction peuvent être extraits radialement par la première ouverture, les risques de détérioration du coulissement et de la conduite de liquide de frein sont éliminés, et la diminution de la rigidité de l'étrier due à la première ouverture est compensée par une portion de voûte située entre la première et la seconde ouverture de manière à donner un maximum de rigidité de voûte au niveau du bras avant du support fixe, là où se situe la déformation maximale de l'étrier soumis d'une part à la pression hydraulique et d'autre part à la poussée due au couple, et cela sans accroissement l'encombrement radial du frein.

Le document GB-A-1 563 213 décrit un frein à disque avec un étrier composite dont la voûte comporte une ouverture centrale dans laquelle font saillie les patins, et deux logements ou ouvertures latérales symétriques, recevant les bras de support fixe, s'étendant à proximité immédiate de l'ouverture centrale et imposant de ce fait une structure d'étrier massive délicate à réaliser en fonderie et faisant largement saillie radialement au-delà de la périphérie du disque.

Le document FR-A-2 226 039 décrit un frein à disque dans lequel l'étrier coulisse sur une colonnette principale chevauchant le disque et sur une colonnette secondaire située sur le côté intérieur du disque, la voûte d'étrier comportant une ouverture centrale unique permettant l'extraction des patins.

On décrira maintenant à titre d'exemple non limitatif un mode de réalisation de l'invention en se référant aux figures annexées dans lesquelles:
- la Figure 1 est une vue de dessus d'un frein à disque réalisé conformément à l'invention;
- la Figure 2 est une vue en coupe selon la ligne 2 - 2 de la figure 1 ; et
- la Figure 3 est une vue en coupe selon la ligne 3 - 3 de la figure 1.

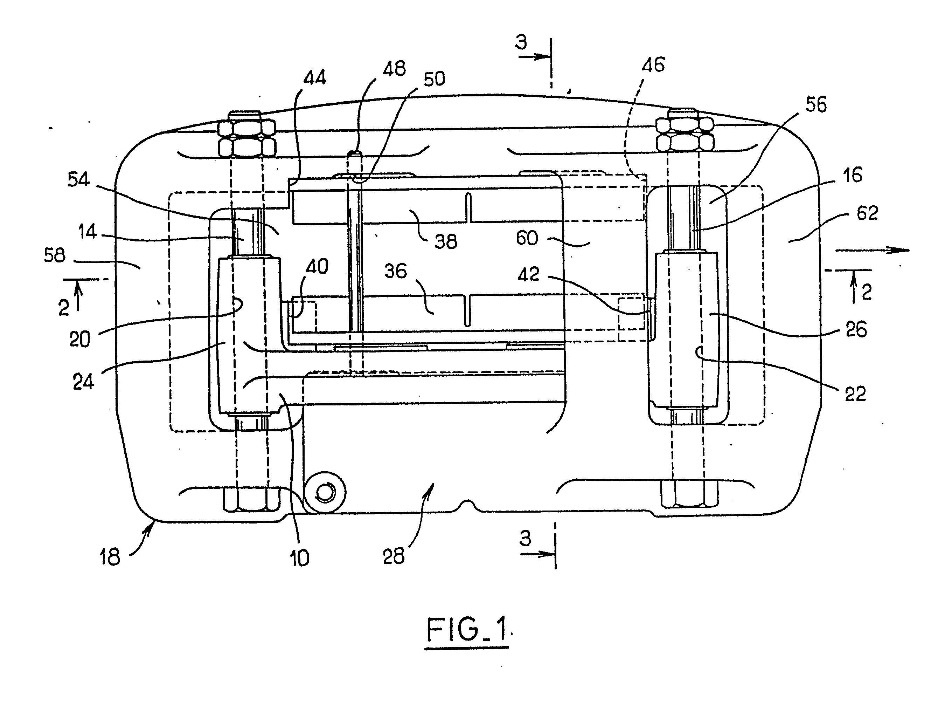

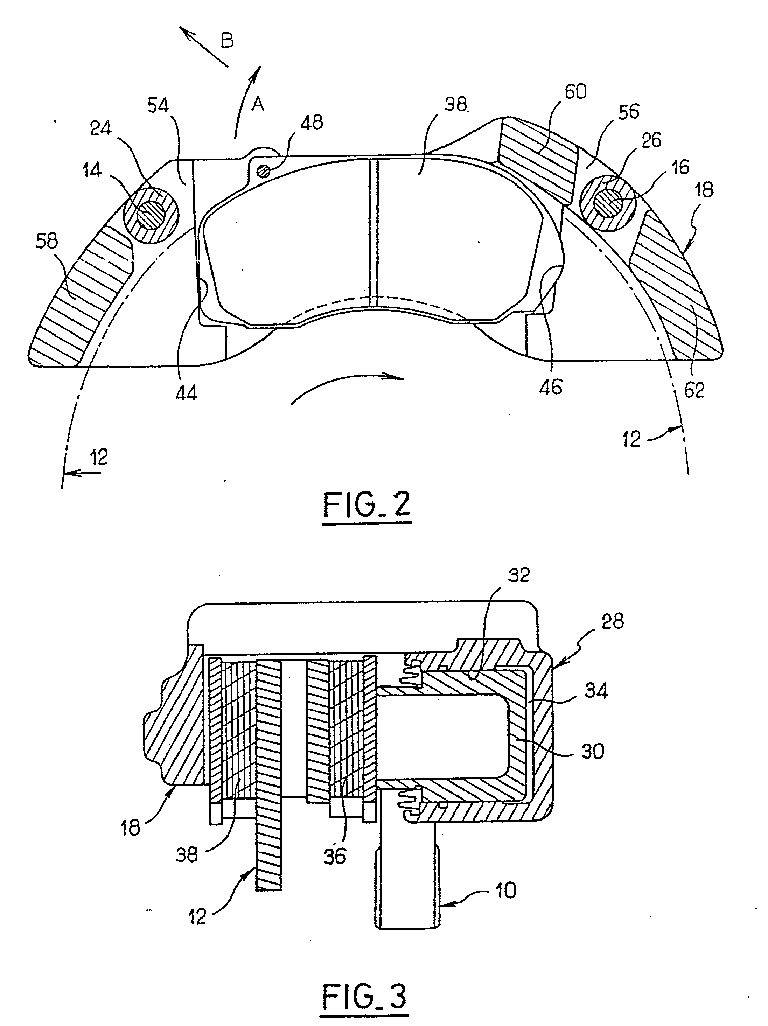

Le frein à disque représenté sur les figures 1 à 3 comporte un support fixe 10 prévu pour être associé à une partie fixe du véhicule (non représentée) et constitué, dans le mode de réalisation représenté, par une plaque disposée au voisinage d'un disque 12 prévu pour être associé en rotation avec une roue du véhicule (non représentée). Le support fixe 10 reçoit en coulissement au moyen de deux colonnettes axiales circonférentiellement espacées 14 et 16 un étrier mobile 18 chevauchant le disque. Les axes des colonnettes 14 et 16 sont sensiblement parallèles à l'axe de rotation du disque 12. Comme on le voit plus particulièrement sur la figure 1, les colonnettes 14 et 16 sont fixes par rapport à l'étrier 18 et passent dans des alésages 20 et 22 formés dans les bras 24 et 26 respectivement du support fixe 10. L'étrier 18 comporte classiquement des moyens d'actionnement constitués par un moteur de frein hydraulique 28, dans le mode de réalisation représenté celui-ci comporte un moteur double, chacun d'eux comportant un piston 30 monté coulissant dans un alésage 32 définit dans l'étrier 18 et sensible à la pression règnant dans une chambre de commande 34 susceptible d'être reliée à une source de pression telle que par exemple, le maître-cylindre du vehicule (non représenté). Les pistons 30 sont disposés de façon à solliciter directement un premier élément de friction ou élément intérieur 36 contre une première face du disque 12 lorsque le fluide sous pression est admis dans la chambre 34. Par réaction, l'étrier 18 est susceptible de se déplacer axialement en coulissement sur les colonnettes 14 et 16 afin de solliciter un second élément de friction ou élément extérieur 38 contre l'autre face du disque 12. Comme le montre la figure 1, l'élément de friction intérieur 36 est supporté encoulissement et en ancrage par des bords axiaux circonférentiellement espacés 40 et 42 formés sur les bras 24 et 26 du support fixe 10. L'élément de friction extérieur 38 est reçu en ancrage sur des bords axiaux circonférentiellement espacés 44 et 46 formés sur l'étrier 18. En désignant par A V le sens de rotation du disque 12 en rotation avant, on peut définir le bras 24 comme étant le bras arrière et le bras 26 comme étant le bras avant. Conformément à l'invention, l'étrier 18 comporte une première ouverture 54 traversée par la colonnette 14 et dans laquelle est placé le bras 24, cette ouverture 54 permet l'extraction radiale des éléments de friction comme on le verra ci-dessous. L'étrier 18 comporte une seconde ouverture 56 traversée par la colonnette 16 et recevant le bras 26 du support fixe. En se reportant à la figure 2, on voit que les bords axiaux 44 et 46 qui reçoivent l'élément de friction extérieur 38 sont arrondis de manière à pouvoir basculer l'élément de friction 38 selon la flèche A puis de l'extraire de l'étrier en le déplaçant suivant la flèche B et ceci au travers de la première ouverture 54. Il en est de même de l'élément intérieur 36. Un axe 48 maintient les éléments de friction intérieur et extérieur par rapport à l'étrier 18 et au support fixe 10 en passant par des perçages placés en vis-à-vis et formés successivement dans l'étrier 18, les éléments de friction 38 et 36 puis le support fixe 10. Une épingle 50 placée entre l'étrier 18 et l'élément de friction 38 immobilise axialement l'axe 48 par rapport à l'étrier. En se reportant à la figure 1, on voit que les deux ouvertures 54 et 56 définissent trois portions de voute, les portions 58 et 60 qui limitent l'ouverture 54, les portions 60 et 62 limitant l'ouverture 56. Les portions 60 et 62 qui sont relativement rapprochées, donnent à l'étrier 18 une rigidité suffisante dans la zone où les contraintes et les déformations sont maximales, c'est-à-dire là où se composent les efforts dus à la pression hydraulique et au couple de freinage.

On comprend de la description qui précède que grâce à l'invention les éléments de friction peuvent être extraits radialement sans démontage des zones de coulissement et sans risque de détériorer la conduite de liquide de frein et ceci sans diminuer la rigidité de l'étrier et sans augmenter son encombrement radial.

Il est bien évident que l'invention n'est pas limitée au mode de réalisation représenté, par exemple on pourrait imaginer un autre mode de fixation et d'ancrage des éléments de friction sans pour cela sortir du cadre de l'invention.

Il est également possible d'augmenter s'il en est besoin la rigidité de l'étrier en utilisant les colonnettes 14 et 16 pour pré-contraindre les deux portions d'étrier situées de part et d'autre du disque, mais cette solution fait l'objet d'une autre demande de brevet déposée le même jour par la demanderesse.

## Revendications

1. Frein à disque comportant un étrier (18) monté coulissant par l'intermédiaire de deux colonnettes axiales (14, 16) sur un support fixe (10) et comportant au moins une portion de voûte chevauchant le disque, des moyens d'actionnement (28) associés à l'étrier (18) pour solliciter des éléments de friction (36) contre les faces du disque (12), les colonnettes (14, 16), solidaires de l'étrier (18), traversant des alésages de guidage et de coulissement (20, 22) formés dans des bras (24, 26) du support fixe (10) s'étendant axialement au-delà, radialement, de la périphérie du disque (12), et reçus dans des ouvertures de l'étrier, le disque définissant, lorsqu'il tourne dans le sens de rotation avant (AV) un bras avant (26) et un bras arrière (24), caractérisé en ce que l'étrier (18) comporte une première (54) et une seconde (56) ouvertures dissymétriques délimitées chacune par deux portions de voûte (58, 60, 62), la première ouverture (54) étant dimensionnée pour recevoir le bras arrière (24) et la colonnette correspondante (14) et permettre l'extraction radiale des éléments de friction (36, 38), la seconde ouverture (56) étant dimensionnée pour recevoir le bras avant (26), sans interférer avec celle-ci, et la colonnette correspondante (16).

2. Frein à disque selon la revendication 1, caractérisé en ce qu'un axe (48) solidaire de façon amovible de l'étrier (18) ou du support fixe (10) traverse axialement la première ouverture (54) interdisant l'échappement radial les éléments de frictions (36, 38).

3. Frein à disque selon la revendication 1 ou la revendication 2, caractérisé en ce que la portion de voûte (60) entre les première (54) et seconde (56) ouvertures chevauche les éléments de friction (36), ceux-ci étant reçus en ancrage et à coulissement entre des faces en egard (44, 46) de l'étrier présentant un profil arrondi pour permettre un basculement des éléments de friction en vue de leur extraction radiale par la première ouverture (54).

## Patentansprüche

1. Scheibenbremse mit einem Bremssattel (18), der mittels zweier axialer Bolzen (14, 16) an einem ortsfesten Bremsträger (10) gleitend gelagert ist und mindestens einen die Bremsscheibe übergreifenden Brückenabschnitt aufweist, Betätigungsmitteln (28), die dem Bremssattel (18) zugeordnet sind, um Bremsbacken (36) gegen die Seitenflächen der Bremsscheibe (12) anzudrücken, wobei die mit dem Bremssattel (18) fest verbundenen Bolzen (14, 16) durch Gleit- und Führungsbohrungen (20, 22) in Armen (24, 26) des Bremsträgers (10) verlaufen, die sich in axialer Richtung radial außerhalb des Umfangs der Bremsscheibe (12) erstrecken und in Öffnungen des Bremssattels richtung (AV) einen vorderen Arm (26) und einen hinteren Arm (24) definiert, dadurch gekennzeichnet, daß der Bremssattel (18) eine erste (54) und eine zweite (56) Öffnung aufweist, die asymmetrisch sind und jeweils von zwei Brückenabschnitten (58, 60, 62) begrenzt werden, wobei die erste Öffnung (54) zur Aufnahme des hinteren Armes (24) und des entsprechenden Bolzens (14) dimensioniert ist und ein radiales Abziehen der Bremsbacken (36, 38) erlaubt, während die zweite Öffnung (56) so dimensioniert ist, daß sie den vorderen Arm (26), ohne sich mit ihm zu überschneiden, sowie den entsprechenden Bolzen (16) aufnehmen kann.

2. Scheibenbremse nach Anspruch 1, dadurch gekennzeichnet, daß eine mit dem Bremssattel (18) oder dem Bremsträger (10) lösbar verbundene Achse (48) sich axial durch die erste Öffnung (54) erstreckt, wobei sie ein radiales Entfernen der Bremsbacken (36, 38) verhindert.

3. Scheibenbremse nach Anspruch 1 oder 2, dadurch gekennzeichnet, daß der Brückenabschnitt (60) zwischen der ersten (54) und zweiten (56) Öffnung die Bremsbacken (36) übergreift, wobei diese zwischen einander zugewandten Flächen (44, 46) des Bremssattels mit abgerundetem Profil gleitend gehaltert sind, um ein Kippen der Bremsbacken zwecks radialem Entfernen durch die erste Öffnung (54) hindurch zu ermöglichen.

## Claims

1. A brake disk comprising a caliper (18) slidingly mounted on a fixed support (10) by means of a pair of axial columns (14, 16) and comprising at least one bridge portion straddling the disk, actuating means (28) associated with the caliper (18) for urging friction elements (36) against the faces of the disk (12), the columns (14, 16) fixed to the caliper (18) traversing guiding and sliding bores (20, 22) formed in arms (24, 26) of the fixed support (10) extending in an axial direction radially outside of the periphery of the disk (12) and received in openings of the caliper, the disk defining, when rotating in the sense of forward rotation (AV), a forward arm (26) and a rearward arm (24), characterized in that the caliper (18) comprises first (54) and second (56) asymmetric openings each delimited by two bridge portions (58, 60, 62), the first opening (54) being dimensioned to receive the rearward arm (24) and the corresponding column (14) and to permit radial withdrawal of the friction elements (36, 38), the second opening (56) being dimensioned to receive the forward arm (26) without interference with the latter, and the corresponding column (16).

2. A brake disk according to claim 1, characterized in that an axis (48) removably fixed to the caliper (18) or the fixed support (10) axially passes through the first opening (54) preventing radial disengagement of the friction elements (36, 38).

3. A disk brake according to claim 1 or claim 2, characterized in that the bridge portion (60) between the first (54) and second (56) openings straddles the friction element (36), the latter being received, in anchored and sliding relationship, between opposite faces (44, 46) of the caliper presenting a curved profile to permit pivoting of the friction elements with a view to their radial withdrawal through the first opening (54).

FIG_1

FIG_2

FIG_3

3